# EUROPÄISCHE PATENTSCHRIFT

(11) **EP 1 316 828 B1**
(45) Veröffentlichungstag und Bekanntmachung des Hinweises auf die Patenterteilung: **07.05.2008**
(21) Anmeldenummer: 02024730.0
(22) Anmeldetag: 06.11.2002
(51) Int. Cl.: G02B 6/42, G02B 6/44

(54) **Verfahren zur Herstellung einer hermetisch dichten Durchführung für eine optische Faser**
Method of production of a hermetic feed-through for an optical fibre
Procédé de production d'une traversée étanche pour une fibre optique

(30) Priorität: 01.12.2001 DE 10159093
(43) Veröffentlichungstag der Anmeldung: 04.06.2003
(73) Patentinhaber: Schott AG, 55122 Mainz (DE)
(72) Erfinder: Fritz, Oliver, Dr., 84032 Altdorf (DE); Steinberg, Andreas, 84186 Vilsheim (DE)
(74) Vertreter: Fuchs

(56) Entgegenhaltungen:
- EP-A- 0 105 198
- EP-A- 0 332 046
- WO-A-88/04437
- DE-A- 3 712 569
- FR-A- 2 693 559
- GB-A- 1 042 782
- US-A- 3 250 631
- US-A- 5 337 387
- PATENT ABSTRACTS OF JAPAN Bd. 1997, Nr. 02, 28. Februar 1997 (1997-02-28) & JP 09 253345 A (TOSHIBA GLASS CO LTD), 1. Oktober 1996 (1996-10-01)
- G. WILLMANN: "Glas in Stoffverbunden und Verbundwerkstoffen" MATERIALWISSENSCHAFT UND WERKSTOFFTECHNIK, Bd. 19, Nr. 12, 1998, Seiten 408-413,
- SCHOTT AG: "Schott Technische Gläser Physikalische und chemische Eigenschaften" 1. Mai 1999 (1999-05-01), SCHOTT AG , MAINZ

## Beschreibung

Die Erfindung bezieht sich auf ein Verfahren zum zum hermetischen Einglasen einer Lichtleitfaser in eine metallische Durchführungs-Hülse mittels eines Glaslotes gemäß dem Oberbegriff des Anspruchs 1.

Moderne Netze für Telekommunikation und Internet (Datenautobahnen) verwenden zur Datenübertragung typischerweise Lichtwellenleiter, d.h. Glasfaserkabel, die aus einem Bündel einzelner Lichtleitfasern, auch optische Glasfasern genannt, bestehen. Die Lichtleitfasern besitzen dabei einen Glaskern, der von einem lichtdichten Mantel umgeben ist.

Durch den wachsenden Ausbau von derartigen Glasfasernetzen entsteht ein derartiger großer Bedarf an Durchführungen von einzelnen Lichtwellenleitern, d.h. von einzelnen Lichtleitfasern, beispielsweise in Hybridgehäuse mit Wandlereinheiten von elektrischen in optische Signale. Das Gehäuse dient dabei zur hermetischen Abdichtung von optoelektronischen Bauteilen, die vor der Einwirkung korrosiver Medien, Luftfeuchte und dergleichen geschützt werden müssen. Diese Durchführungen durch die Gehäusewandung müssen daher dauerhaft hermetisch sein, damit der Schutz der Bauteile ständig gewährleistet ist.

Es sind eine Reihe von Verfahren bekannt, um derartige hermetische Durchführungen herzustellen.

Bei einer bekannten Vorrichtung zum hermetischen Durchführen eines Lichtwellenleiters (DE 34 31 748) sind zwei Durchführungselemente vorgesehen, die an der Wand bzw. dem Lichtwellenleiter abgedichtet befestigt und danach miteinander abgedichtet verbunden werden müssen. Das ist umständlich und zeitraubend und beinhaltet eine Reihe von Fehlermöglichkeiten.

Bei einer anderen bekannten Durchführung eines Lichtwellenleiters (US 4,357,072) wird der freigelegte Lichtwellenleiter metallisiert und mit der Wand metallisch dicht verlötet.

Das Metallisieren des aus Glas bestehenden Lichtwellenleiters ist aufwendig und kann leicht mit Fehlern behaftet sein. Ein Biegeschutz für den nach außen abgehenden Teil des Lichtwellenleiters ist nicht in einfacher Weise möglich.

In der EP-A-0 105 198 wird eine durckfeste und gasdichte Lichtwellenleiterdurchführung beschrieben, in welcher ein Lichtwellenleiter ohne umhüllende Schutzschicht mittels eines niedrigschmelzenden Glases in einer Durchführungshülse eingeschmolzen ist und an beiden Enden jeweils in ein Steckverbindungsteil mündet. Zur Durchführung des Lichtwellenleiters sind also ausgangs und eingangsseitig zwei Steckverbindungen vorgesehen, mit dem Nachteil der bei Verbindungen von Lichtwellenleitern unvermeidlich auftretenden Koppelverluste.

Es sind auch Verfahren zur Herstellung von hermetischen Durchführungen in der Praxis bekannt, bei denen eine metallische Hülse vorgesehen ist, durch die die Glasfaser geführt ist, und dabei beispielsweise mit Epoxidklebern in der Hülse eingeklebt ist oder durch Einspritzen von flüssigen metallischen Weichloten in die Hülse darin befestigt ist. Im letzteren Fall wird die Faser auch in metallisierter Form eingesetzt. Diese Hülsen wiederum werden dann in die Wandung von Hybridgehäusen eingelötet.

Diese Verfahren, vor allem die Klebetechnik, erzeugen jedoch keinen dauerhaft hermetischen Verbund.

Es ist auch bekannt (EP 0 332 046 B1), die durchzuführende Lichtleitfaser in einer Durchführungshülse mittels einer Glaslötung zu befestigen und die Durchführungshülse selbst ebenfalls mittels Glaslötung in der Wandöffnung hermetisch dicht zu befestigen.

Auch die EP 0 274 222 zeigt eine Durchführung mit einer Metallhülse, in der die Lichtleitfaser mittels Glaslötung befestigt ist.

Diese bekannten Glaslot-Verfahren beschreiben Einglasungen mittels Glaslotkapillaren, und liefern daher aufgrund von hoher Fehlanpassung der thermischen Ausdehnungskoeffizienten keine befriedigenden Ergebnisse. Denn diese Glaslotkapillare sind nur aus stabilen Glasloten herstellbar und haben daher relativ hohe thermische Ausdehnungskoeffizienten von in der Regel > 10 ppm/K. Zu Kapillaren ziehbare, stabile Gläser mit einem kleinen Ausdehnungskoeffizienten, z.B. α~ 5 ppm/K, würden Einschmelztemperaturen erfordern, die zu einer extremen thermischen Schädigung (Versprödung) der Fasern führte. Dadurch ist zum einen keine erstrebenswerte hermetische Einglasung in metallische Hülsen mit einem α~ 5 ppm/K möglich, d.h. in Hülsen aus einem Werkstoff, welcher aufgrund seiner geringen Wärmedehnung das bevorzugte Material für optoelektronische Gehäuse darstellt. Zudem verursacht die hohe dilathermische Fehlanpassung - bedingt durch Spannungen - eine Dämpfung des optischen Signals.

Aus der FR 2 693 559 ist es bekannt, eine hermetisch dichte Einglasung einer Glasfaser in einer Eisen-Nickel-Ferrule mit Hilfe eines gesinterten Presslings vorzunehmen.

Aus der US 5 337 387 ist das Verwenden zweier Halbschulenpresslinge für die Einglasung einer Glasfuser in einer Stahlferrule beschrieben.

Der Erfindung liegt daher die Aufgabe zugrunde, ein Verfahren zum hermetischen Einglasen einer Lichtleitfaser in eine metallische Durchführungs-Hülse zu schaffen, das eine dauerhaft hermetische Durchführung ermöglicht und zudem verfahrenstechnisch relativ einfach zu realisieren ist.

Die Lösung dieser Aufgabe wird mit einem Verfahren gelöst, das dadurch gekennzeichnet ist, dass eine Durchführungshülse aus einer Legierung auf Fe-Ni-Co oder Fe-Ni-Basis verwendet wird, dass der vorgesinterter Pressling in Gestalt von zwei halbzylinderförmigen Halbschalen aus einem Komposit-Glaslot aus einem Bleiboratgrundglas oder einem Phosphatglas mit jeweils einem inerten dehnungsabsenkenden Füllstoff mit einer thermischen Ausdehnung im Bereich von α~ 4,3 - 5·10⁻⁶/K und mit einer Verarbeitungstemperatur unterhalb der Curie-Temperatur der Legierung der Durchführungs-Hülse bereitgestellt wird, die jeweils eine axiale Rille mit halbkreisförmigen, an den Durchmesser der freigelegten Glasfaser angepassten Querschnitt aufweisen, dass die beiden Halbschalen in der Durchführungs-Hülse unter Einbetten der freigelegten Glasfaser in die Rillen der Halbschalen assembliert und positioniert werden und dass die Halbschalen untereinander sowie mit der Glasfaser und der Durchführungs-Hülse durch lokalen Wärmeeintrag verschmolzen werden.

Durch die erfindungsgemäßen Maßnahmen gelingt es auf verfahrenstechnisch relativ einfache Weise eine dauerhafte, hermetische Einglasung zu schaffen.

Weiterbildungen und Ausgestaltungen der Erfindung sind in den Unteransprüchen gekennzeichnet und werden auch in der Beschreibung dargestellt.

Anhand eines in den Zeichnungen dargestellten Ausführungsbeispieles wird die Erfindung näher beschrieben.

Es zeigen:
- Fig. 1: in einer Längsschnitt-Darstellung eine Durchführungs-Hülse mit eingeglaster Lichtleitfaser, ausgebildet nach der Erfindung,
- Fig. 2: in einer Explosions-Darstellung die an der Einglasung nach Fig. 1 beteiligten Komponenten,
- Fig. 3: in einem Längsschnitt die Ausbildung der Durchführungs-Hülse mit ihren beiden axialen Abschnitten,
- Fig. 4: ein vorgefertigter, halbzylinderförmiger Pressling aus einem niedrig schmelzenden Komposit-Glaslot mit einer axialen Rille, wobei zwei dieser Presslinge in assemblierter Form gemäß Fig. 1 die abgemantelte Lichtleitfaser in der Rille umfassen, und
- Fig. 5: den typischen Aufbau einer konventionellen Lichtleitfaser mit einem Glasfaser-Kern und einer Ummantelung bzw. Schutzschicht.

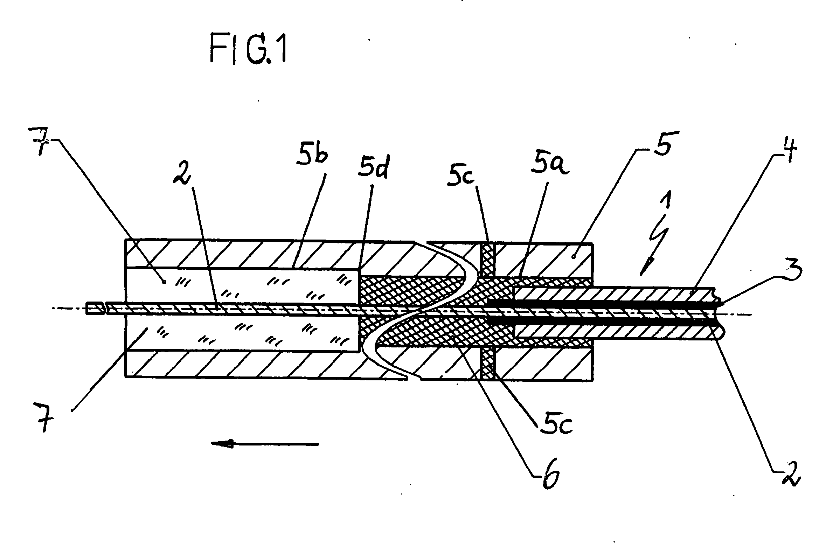

Die Fig. 1 zeigt in einer Längsschnitt-Darstellung den Aufbau eines bevorzugten Ausführungsbeispieles einer assemblierten erfindungsgemäßen hermetischen Durchführung einer Lichtleitfaser durch eine Wandung mit einer Durchführungs-Hülse aus einer speziellen Metalllegierung, in der die Lichtleitfaser mittels eines speziellen Lotglases eingeschmolzen ist. Die metallische Durchführungs-Hülse selbst ist mit bekannten löttechnischen Methoden in einer Öffung in der Wandung (nicht dargestellt) befestigt, wobei die Wandung vorzugsweise ebenfalls aus dem gleichen Werkstoff wie die Durchführungshülse besteht, damit keine mechanischen Spannungen aufgrund unterschiedlicher thermischer Ausdehnungskoeffizienten auftreten, die die Dauerhaftigkeit des hermetischen Abschlusses gefährden könnten.

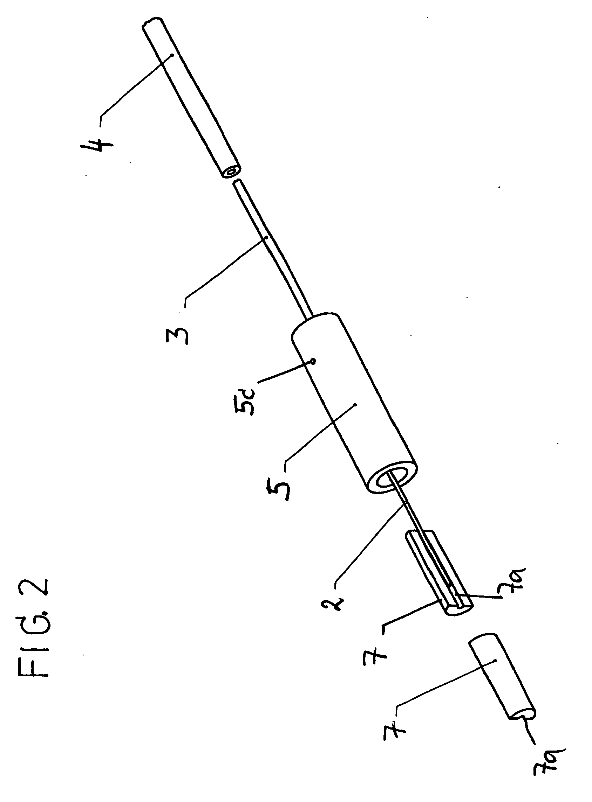

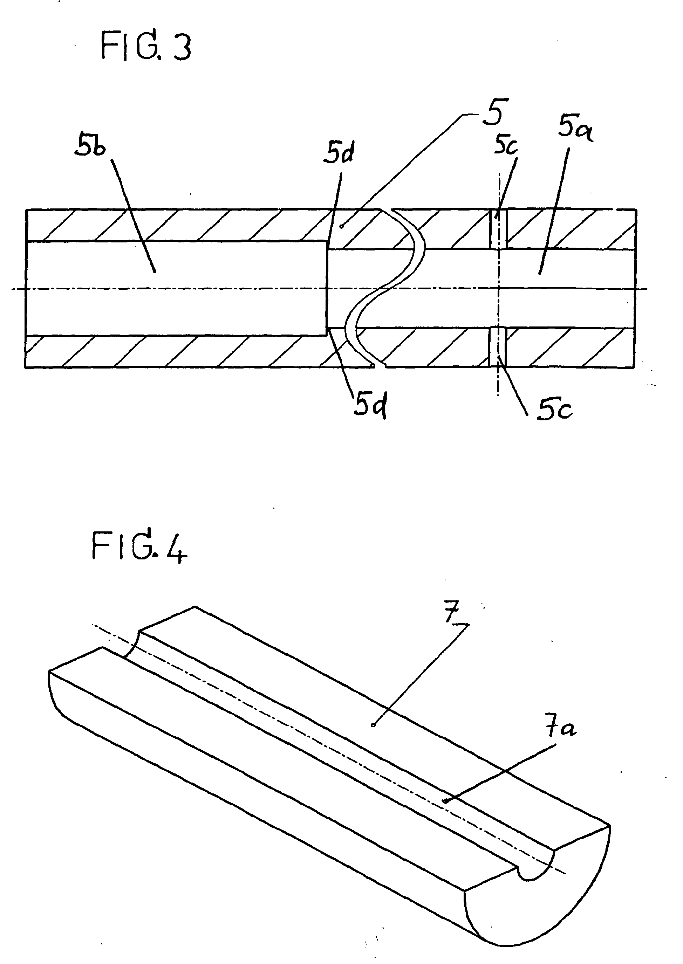

Die Fig. 2 zeigt in einer Explosionsdarstellung die beteiligten Komponenten der Durchführung bzw. Einschmelzung nach Fig. 1, die jeweils in gesonderten Figuren 3 - 5 näher dargestellt sind.

Die erfindungsgemäße hermetische Durchführung baut daher generell auf einer Glas/Metall-Durchführung auf.

Unter Glas/Metall-Durchführungen versteht man generell in der Elektronik und Elektrotechnik vakuumdichte Verschmelzungen von Gläsern mit Metallen zur isolierten Durchführung von elektrischen Leitern in hermetisch gekapselte Gehäuse. Bei der typischen Glas/Metall-Durchführung werden in ein äußeres Metallteil ein vorgeformtes Sinterglasteil und in dieses wiederum ein oder mehrere metallische Innenleiter eingeschmolzen.

Durch Unterschiede im Ausdehnungsverhalten zwischen Gläsern und Metallen ist es unvermeidlich, daß bei deren Verschmelzung mechanische Spannungen entstehen. Mit einer sogenannten "angepaßten Glas/Metalldurchführung" sorgt man beispielsweise dafür, daß derartige Spannungen nicht zu einer Schwächung der Einschmelzung führen. Zur diathermischen Anpassung einer Glas-Metallverschmelzung müssen die thermischen Ausdehnungskoeffizienten von Glas und Metallteilen zwischen Raumtemperatur und Transformationstemperatur des Glases weitgehend übereinstimmen. Damit erreicht man, daß die mechanischen Spannungen in der Verschmelzung während der Abkühlung der Durchführung vom Einfrierbereich des Glases (Viskositätsbereich zwischen 10¹³ und 10^{14.S} dPas) auf Raumtemperatur die für das Glas zulässigen Festigkeitsgrenzwerte nicht überschreiten. Durch Wahl optimaler Fertigungsbedingungen wird erreicht, daß diese Glas/Metall-Durchführungen bei Raumtemperatur praktisch spannungsfrei sind.

Die für das angepaßte Einschmelzen von elektrischen Leitern bekannten Methoden und Werkstoffe sind jedoch für das Einschmelzen von Lichtleit-Glasfasem in metallische Hülsen im Hinblick auf das andere Material und die wesentlich geringeren Abmessungen nicht übertragbar.

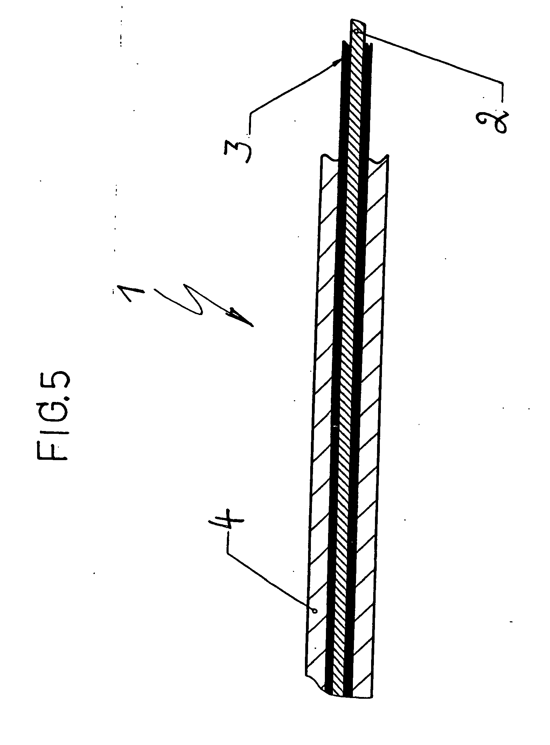

Die Fig. 5 zeigt den Aufbau einer Lichtleitfaser 1, wie sie typischerweise für die modernen Glasfaserkabel verwendet werden.

Diese Lichtleitfaser 1, auch Lichtwellenleiter genannt, weist eine Glasfaser 2 mit einem typischen Außendurchmesser von 125 µm und einem Quarzglaskem von 50 µm Durchmesser auf. An der Glasfaser 2 haftet eine innere Kunststoff-Schutzschicht 3 fest an.

Der Lichtwellenleiter 1 besitzt ferner eine äußere, lose Kunststoff-Ummantelung 4, die eine äußere Schutzhülle bildet.

Wie dieser Lichtwellenleiter 1 in einer metallischen Durchführungs-Hülse 5 angepaßt eingeschmolzen ist, zeigt insbesondere die Fig. 1.

Diese Durchführungs-Hülse 5, die in Fig. 3 im Schnitt näher dargestellt ist, besteht aus einem Werkstoff mit einem sehr niedrigen thermischen Ausdehnungskoeffizienten (α ∼ 5 ppm/K). Ein solcher Werkstoff ist insbesondere der Werkstoff VACON der Firma Vakuumschmelze. Dieser Werkstoff ist eine spezielle Einschmelzlegierung für Hartglas und Keramik, die sich durch eine kontrollierte Wärmeausdehnung mit linearem Wärmeausdehnungskoeffizienten von nahe Null auszeichnet. Er setzt sich chemisch in Gew.%en aus Ni (- 29 %), Co (17 - 23 %), Mn (0,25 %), Si(- 0,2 &), C < 0,02 % und Fe (Rest) zusammen und ist unter den Werkstoff-Nummern 1.3981 und 1.3982 registriert.

Diese Werkstoffe auf der Basis von Ni-Co-Fe-Legierungen werden auch von anderen Firmen angeboten, z.B. von Westinghouse Electric Corporation unter der Marke "KOVAR". Weitere Handelsnamen sind Therlo, Rodar, Nicoseal, Sealvac-A, Nilo K, Dilver P. Sie werden in den einschlägigen Firmen-Datenblättern und Werkstoff-Handbüchern beschrieben, z.B. im "Handbook of Materials and Techniques for Vakuum Devices" von Walter H. Kohl, erschienen bei Reinhold Publishing Corporation, 430 Park Avenue, New York, N.Y. 10022. Die geringe Wärmeausdehnung dieser Legierungen beruht auf den außergewöhnlichen Ausdehnungseigenschaften, die man in den Systemen Fe-Ni-Co, Fe-Ni-Cr und Fe-Ni vorfindet. Die kleine Wärmeausdehnung dieser Legierungen wird durch den Invar-Effekt (positive Vakuummagnetostriktion) verursacht, die sich bis zum Curiepunkt auswirkt. Es ist daher auch die Legierung Ni-Fe 42 einsetzbar.

Typischerweise besteht auch das Gehäuse einer elektrooptischen Anordnung, durch deren Wandung die Hülse 5 geführt ist, aus einer dieser Legierungen, so daß insoweit thermomechanische Spannungen zwischen Hülse und Gehäusewandung vermieden werden.

Die Durchführungs-Hülse 5 ist dabei zur besseren Verlötbarkeit in der Gehäusewandung vergoldet. Sie besitzt zwei axiale Abschnitte 5 a, 5 b mit unterschiedlichen Innendurchmessern. Im eintrittsseitigen Abschnitt 5 a mit kleinerem Durchmesser als im austrittsseitigem Abschnitt 5 b, ist die durchzuführende bzw. einzuschmelzende Lichtleitfaser 1 zunächst komplett mit allen Bestandteilen aufgenommen. Im weiteren Verlauf ist zunächst die äußere lose Kunststoff-Ummantelung 4, danach auch die fest anhaftende Kunststoffschicht 3, entfernt, so daß etwa über die Hälfte des 1. Abschnittes 5 a und vollständig über den 2. Abschnitt 5 b nur die "gestrippte" oder "entcoatete" Glasfaser 2 aufgenommen ist.

Die Durchführungs-Hülse 5 besitzt ferner Löcher 5 c zur Befüllung des ersten Abschnites 5 a mit beispielsweise Epoxidharz 6 als Zugentlastung für die Glasfaser. Im zweiten Abschnitt 5 b sind zwei Halbschalen 7 aus einem an den Werkstoff der Durchführungs-Hülse 5 angepaßten Kompositglaslot in Form von halbzylinderförmigen Glaslot-Preßlingen aufgenommen. Die Schulter 5 d am Übergang zwischen beiden Abschnitten 5 a, 5 b der Hülse dient dabei zur Positionierung der beiden Glaslot-Halbschalen in der Durchführungs-Hülse. Eine dieser Halbschalen-Glaslotpreßlinge 7 ist in der Fig. 4 näher dargestellt.

Die Halbschalen-Preßlinge 7 weisen jeweils mittig eine im Querschnitt halbkreisförmige Rille 7 a auf, in der die entcoatete Glasfaser 2 eingebettet ist. Diese Halbschalen-Glaslotpreßlinge dienen der "eigentlichen" Einschmelzung der Lichtleitfaser in der metallischen Durchführungs-Hülse 5, d.h. bilden die Lotglaseinschmelzung als hermetischer Verbund der Halbschale mit Glasfaser und Hülse. Die halbschalenförmigen Glaslotpreßlinge 7 bestehen aus einem niedrigschmelzenden Kompositglaslot mit an den Werkstoff der Durchführungshülse angepaßter thermischen Dehnung. Ihr Außendurchmesser bestimmt sich nach dem Innendurchmesser der Hülse 5 im Abschnitt 5 b, und ihr Innendurchmesser, d.h. der Durchmesser der Rille 7 a, bestimmt sich nach dem Durchmesser der Glasfaser 2. Die maximale Länge ist preßtechnisch auf den ca. dreifachen Außendurchmesser limitiert.

Generell werden Glaslotpreßlinge nach der Preß/Sintertechnologie hergestellt, um in der Elektronik/Elektrotechnik als Glasformteile zur Herstellung hermetischer Einschmelzungen eingesetzt zu werden. Die für derartige Anwendungen erforderlichen komplexen Formen und engen Toleranzen können mit den sonst bei der Glasherstellung gängigen Heiß-Formgebungsverfahren nicht oder zumindest nicht wirtschaftlich hergestellt werden. Der Weg über Glaspulver, Glasgranulate und Preß-Sinter-Technik erlaubt hier eine wesentlich rationellere Produktion bei hoher Maßhaltigkeit. Zu Pulver gemahlenes Glas eignet sich nicht direkt zum Trockenpressen. Durch den Zusatz von Binder wird das an sich unplastische Glaspulver in eine riesel- und preßfähige Form gebracht. Dieses sogenannte Glas-Preßgranulat wird durch Versatz von feinkörnigem Glaspulver (d₅₀ ca. 10 - 20 µm) mit organischen Bindemitteln (und Plastifikatioren) im Sprühtrocknungsverfahren hergestellt.

Hierzu wird das Glaspulver und gegebenenfalls ein Farbpigment und/oder dehnungsabsenkende inerte Füllstoffe in einer wässrigen Binderemulsion suspendiert. Dieser Sprühschlicker wird dann durch eine Düse in die Kammer des Sprühtrockners eingesprüht. Die dabei entstehenden Tröpfchen trocknen im Gegenstrom des Trockungsgases zu Granalien. Die Kornverteilung des erhaltenen Preßgranulates liegt zwischen 80 µm und 350 µm.

Danach wird das Preßgranulat in uniaxialen Pressen im Trockenpreßverfahren in die gewünschte Form gebracht. Das eigentliche Preßwerkzeug besteht aus einer Preßmatrize sowie Ober- und Unterstempel. Je nach Komplexität des Preßlings können die Stempel zusätzlich mehrfach unterteilt sein. Die Befüllung der Form mit Granulat geschieht mittels eines Füllschuhes. Die eigentliche Kompaktierung erfolgt dann durch eine gesteuerte Abwärtsbewegung des Oberstempels (einseitiges Pressen) oder durch simultane Bewegung von Ober- und Unterstempel gegeneinander (zweiseitiges Pressen). Die Verdichtung (Verhältnis der Fülltiefe mit Granulat zur Höhe des Grünlinges nach dem Pressen) liegt bei ca. 2,5 : 1. Danach wird der Preßling über einen Ausstoß als "Grünling" aus der Form entfernt.

Um gleichmäßige Verdichtung und damit einen homogenen Sinterschwund zu gewährleisten, darf das Verhältnis von Höhe (Maß in Preßrichtung) zu Durchmesser des Glaspreßlings nicht beliebig groß sein. Die Grenze für Vollkörper oder Teile mit nicht zu geringer Wandstärke liegt bei ca. 3 : 1.

Zur Herstellung von formstabilen Sinterglasteilen werden die Grünlinge (Glaspreßlinge) nach dem Pressen in Spezialöfen (meist Durchlauföfen) entbindert und zu den endgültigen Abmessungen gesintert. Um einen vollständigen Binderausbrand zu gewährleisten, erfolgt der Vorgang nach einer speziellen Temperatur/Zeitkurve, bei der die Grünlinge zuerst mit einer moderaten Heizrate auf die Ausbrandtemperatur des Binders aufgeheizt werden.

Nachdem der Binder vollständig ausgebrannt ist, werden die Preßlinge weiter auf eine höhere Temperatur erhitzt, bei der die eigentliche Sinterung zu kompakten Glasteilen stattfindet. Diese Temperatur entspricht dabei einer Temperatur, bei der das entsprechende Glas eine Viskosität von etwa 10⁸ dPas und -10⁹ dPas aufweist. Der Sinterschrumpf (Unterschied der Abmessungen zwischen Grünglas-Pressling und gesintertem Glasteil) liegt bei ca. 14 %.

Die Herstellung derartiger Glaslot-Preßlinge als Sinterglas-Formteile für die Durchführung einer einzigen Lichtleitfaser ist jedoch problematisch, denn ein Glaslotpreßling mit einem Innendurchmesser, der im Bereich üblicherweise verwendeter optischer Glasfasern (125µm) liegt, ist preßtechnisch nicht herstellbar. Die untere Grenze liegt bei ca. 350µm nach Sinterung, bedingt durch die verfügbaren Materialien für Preßwerkzeuge.

Jedoch ist es überraschenderweise gemäß der Erfindung möglich, Halbschalen zu pressen, die die Form eines solchen, entlang seiner Längsachse halbierten Preßlings haben. Zwei dieser Halbschalen 7 können dann, wie in den Zeichnungen dargestellt, um die gestrippte Glasfaser 2 assembliert und - wie mit einem regulären Preßling mit Innenloch - in eine rohrförmige Hülse oder Bohrung in einem Hybridgehäuse eingebracht und verschmolzen werden.

Zudem erlaubt diese neue Technik die Einglasung an jeder beliebigen Stelle eines Faserstrangs und nicht nur endständig wie beim Stand der Technik. Hierzu kann das Coating der Glasfaser an jeder beliebigen Stelle entfernt und mit den beiden Halbschalen und der Hülse assembliert werden.

Die eigentliche thermische Verschmelzung kann dann z.B. mit Hilfe einer elektrisch beheizten Glühwendel, aber auch induktiv, mittels fokussierter IR-Strahlung oder in speziell gestalteten Öfen erfolgen, die einen lokalen Wärmeeintrag gewährleisten, der auf den Einschmelzbereich konzentriert ist und so eine thermische Schädigung der Schutzschicht bzw. äußeren Ummantelung der Glasfaser verhindert.

Die halbschalenförmigen Glaslot-Preßlinge 7 bestehen, wie bereits erwähnt, aus niedrigschmelzenden Komposit-Glasloten mit an den Werkstoff der Durchführungshülse 5 angepaßter thermischen Dehnung. Derartige Komposit-Glaslote zur Herstellung starrer, in der Regel elektrisch isolierender und hermetischer Verbindungen zwischen Werkstoffen wie Glas, Keramik oder Metall, werden insbesondere in der Produktinformation Nr. 4823/1 d der Anmelderin beschrieben. Unter Komposit-Glasloten versteht man dabei Glaslote, deren thermische Ausdehnung durch inerte Füllstoffe mit kleiner oder gar negativer thermischer Ausdehnung modifiziert ist. Die Komposit-Glaslote ermöglichen auch eine Senkung der Löttemperatur. Als geeignet für die Herstellung der halbschalenförmigen Glaslot-Preßlinge hat sich beispielsweise ein niedrigschmelzendes, stabiles Glaslot mit der in vorgenannter Produktinformation gelisteten Schott-Glasnummer G 017-339 erwiesen. Dieses Komposit-Glaslot besteht aus einem Bleiboratgrundglas mit einem inerten, dehnungsabsenkenden Füllstoff β- - Eukryptit mit einem linearen thermischen Ausdehnungskoeffizienten nach DIN 52328 α 20 - 250 von 4,7 · 10⁻⁶ K⁻¹ und einer Transformationstemperatur nach DIN 52 324 von 325° C. Es ist typischerweise geeignet für Materialien mit einer thermischen Ausdehnung von 5 - 6 ppm/K. Grundsätzlich sind aber auch andere Füllstoffe einsetzbar.

Des Weiteren können auch Phosphatglaslote mit geeigneten Füllstoffen eingesetzt werden. Auch ein Komposit-Glaslot mit modifiziertem Bleititanat entsprechend der Schott-Glasnummer G 018 - 174 ist verwendbar. Wichtig für eine gut angepaßte Einglasung ist nur, daß die thermische Ausdehnung im Bereich von 4,3 - 5 ppm/K liegt und die Verarbeitungs(Löt-)temperatur unterhalb der Curietemperatur des Werkstoffes der Durchführungs-Hülse 5 liegt.

Das Herstellen von gesinterten Glaslot presslingen aus wiedrigschmolzendem Kompositglaslot ist bekannt (siehe die Artikel: "Glas in Stoffverbunden und Verband werkstoffen" von G. Willmann in der Zertsohrift "Mat. wiss. und werkstofftech. 19, 408-413 (1988) und die Veröffentlichung der Schotl AG. "Schott Technische Gläser, Physikalische und chemische Eigenschaften, Mai 1999). Ein spezielles Kompositglaslot mit Blei-Kalzium-Titanat-Füller ist ebenfalls bekannt (DE 37 12 569).

## Patentansprüche

1. Verfahren zum hermetischen Einglasen einer Lichtleitfaser in eine metallische Durchführungs-Hülse mittels eines Glaslotes,
wobei eine Durchführungs-Hülse (5) aus einem metallischen Werkstoff bereitgestellt wird, die Lichtleitfaser (1) von Schutzschichten unter Freilegung der Glasfaser (2) abgemantelt wird, die Glasfaser (2) in der Durchführungs-Hülse (5) positioniert wird und mittels eines vorgesinterten Presslings aus Glaslot eingeglast wird, wobei
eine Durchführungshülse (5) aus einer Legierung auf Fe-Ni-Co oder Fe-Ni-Basis verwendet wird,
**dadurch gekennzeichnet,**
**dass** der vorgesinterter Pressling in Gestalt von zwei halbzylinderförmigen Halbschalen (7) aus einem Komposit-Glaslot aus einem Bleiboratgrundglas oder einem Phosphatglas mit jeweils einem inerten dehnungsabsenkenden Füllstoff mit einer thermischen Ausdehnung im Bereich von α ∼ 4,3 - 5·10⁻⁶/K und mit einer Verarbeitungstemperatur unterhalb der Curie-Temperatur der Legierung der Durchführungs-Hülse (5) bereitgestellt wird, die jeweils eine axiale Rille (7a) mit halbkreisförmigen, an den Durchmesser der freigelegten Glasfaser (2) angepassten Querschnitt aufweisen,
**dass** die beiden Halbschalen (7) in der Durchführungs-Hülse (5) unter Einbetten der freigelegten Glasfaser (2) in die Rillen der Halbschalen (7) assembliert und positioniert werden und
**dass** die Halbschalen untereinander sowie mit der Glasfaser (2) und der Durchführungs-Hülse (5) durch lokalen Wärmeeintrag verschmolzen werden.

2. Verfahren nach Anspruch 1, bei dem eine Durchführungs-Hülse (5) bereitgestellt wird, die zwei axiale Abschnitte (5a, 5b) mit unterschiedlichen Durchmessern aufweist, einen Abschnitt (5b) zur Aufnahme der Halbschalen-Presslinge (7) und einen vorgeschalteten Abschnitt (5a) mit geringerem Durchmesser, in welchem die Lichtleitfaser nur in einem vorgegebenen Abschnitt abgemantelt ist, und der mit einem Kleber (6) ausgefüllt wird.

3. Verfahren nach einem der Ansprüche 1 oder 2, bei dem eine Durchführungs-Hülse (5) bereitgestellt wird, die zumindest am Außenmantel vergoldet ist.

4. Verfahren nach einem der Ansprüche 1 bis 3, bei dem die halbzylinderförmigen Komposit-Glaslotpresslinge (7) nach der Press/Sintertechnologie hergestellt werden.

5. Verfahren nach einem der Ansprüche 1 bis 4 bei dem als Komposit-Glaslot für die Halbschalen-Presslinge (7) das Bleiboratgrundglas mit dem Füllstoff β-Eukryptit, verwendet wird.

6. Verfahren nach einem der Ansprüche 1 bis 5, bei dem das lokale thermische Verschmelzen mittels einer elektrisch beheizten Glühwendel, oder induktiv, oder mittels fokussierter IR-Strahlung oder in speziell gestalteten Öfen, mit lokalem Wärmeeintrag erfolgt.

## Claims

1. Method for hermetically glazed enclosure of an optical fibre in a metallic feed-through sleeve by means of a glass solder, a feed-through sleeve (5) being prepared from a metallic material, the optical fibre (1) being stripped of protective layers to expose the glass fibre (2), and the glass fibre (2) being positioned in the feed-through sleeve (5) and glazed in by means of a presintered blank of glass solder, a feed-through sleeve (5) made from an alloy based on Fe-Ni-Co or Fe-Ni being used, **characterized in that** the presintered blank is prepared in the form of two semicylindrical half shells (7) of a composite glass solder made from a lead borate base glass or a phosphate glass in each case having an inert expansion-reducing filler with a thermal expansion in the range of α ~ 4.3 - 5·10⁻⁶/K and with a processing temperature below the Curie temperature of the alloy of the feed-through sleeve (5), which in each case have an axial groove (7a) with a semicircular cross section adapted to the diameter of the exposed glass fibre (2), **in that** the two half shells (7) are assembled and positioned in the feed-through sleeve (5) with the exposed glass fibre (2) being embedded in the grooves of the half shells (7), and **in that** the half shells are fused with one another and with the glass fibre (2) and the feed-through sleeve (5) by local heat input.

2. Method according to Claim 1, in which a feed-through sleeve (5) is prepared which has two axial sections (5a, 5b) with different diameters, a section (5b) for holding the half shell blanks (7) and an upstream section (5a) with a smaller diameter, in which the optical fibre is stripped only in a prescribed section, and which is filled with an adhesive (6).

3. Method according to one of Claims 1 or 2, in which a feed-through sleeve (5) is prepared which is gold-plated at least on the outer sheath.

4. Method according to one of Claims 1 to 3, in which the semicylindrical composite glass solder blanks (7) are produced using press/sinter technology.

5. Method according to one of Claims 1 to 4, in which the lead borate base glass with the filler β-eucryptite is used as composite glass solder for the half shell blanks (7).

6. Method according to one of Claims 1 to 5, in which the local thermal fusing is performed by means of an electrically heated incandescent filament, or inductively, or by means of focussed IR radiation, or in specifically fashioned furnaces with the aid of local heat input.

## Revendications

1. Procédé pour englober hermétiquement dans du verre une fibre optique à l'intérieur d'une douille métallique de passage, au moyen d'une brasure de verre,
dans lequel une douille de passage (5) en matériau métallique est préparée, les fibres optiques (1) sont débarrassées des couches de protection de manière à libérer la fibre de verre (2), la fibre de verre (2) est placée dans la douille de passage (5) et est englobée dans du verre au moyen d'une ébauche comprimée préfrittée de brasure de verre,
dans lequel on utilise une douille de passage (5) constituée d'un alliage à base de Fe-Ni-Co ou de Fe-Ni, **caractérisé en ce que**
l'ébauche comprimée préfrittée est préparée sous la forme de deux demi-coquilles (7) de forme semi-cylindrique constituées d'une brasure de verre composite formée de verre de base au borate de plomb ou de verre phosphaté avec une charge inerte de diminution de la dilatation, dont la dilatation thermique est comprise dans la plage de α~ 4,3 - 5.10⁻⁶ /K et dont la température de traitement est inférieure à la température de Curie de l'alliage de la douille de passage (5) et qui présentent chacune une rainure axiale (7a) dont la section transversale semi-cylindrique est adaptée au diamètre de la fibre de verre (2) dénudée,
**en ce que** les deux demi-coquilles (7) sont assemblées et placées dans la douille de passage (5) en incorporant la fibre de verre (2) dénudée dans les rainures de la demi-coquille (7) et
**en ce que** par apport local de chaleur, les demi-coquilles sont fondues l'une avec l'autre et avec la fibre de verre (2) ainsi que la douille de passage (5).

2. Procédé selon la revendication 1, dans lequel on prépare une douille de passage (5) qui présente deux tronçons axiaux (5a, 5b) de diamètres différents, un tronçon (5b) étant destiné à reprendre les ébauches comprimées (7) en demi-coquilles et un tronçon amont (5a) de plus petit diamètre dans lequel la fibre de verre n'est dénudée que sur une partie prédéterminée, et qui est remplie d'un adhésif (6).

3. Procédé selon l'une des revendications 1 ou 2, dans lequel on prépare une douille de passage (5) dont au moins l'enveloppe extérieure est dorée.

4. Procédé selon l'une des revendications 1 à 3, dans lequel les ébauches comprimées (7) en brasure de verre composite et de forme semi-cylindrique sont préparées en recourant à la technologique de compression/frittage.

5. Procédé selon l'une des revendications 1 à 4, dans lequel on utilise comme brasure de verre composite pour les ébauches (7) comprimées des demi-coquilles le verre de base au borate de plomb avec comme charge de la β-eucryptite.

6. Procédé selon l'une des revendications 1 à 5, dans lequel la fusion thermique locale s'effectue par apport local de chaleur au moyen d'une bougie incandescente chauffée électriquement, par induction ou par un rayonnement IR focalisé ou dans des fours de forme spéciale.
